(19) Europäisches Patentamt
European Patent Office
Office européen des brevets

(11)  **EP 2 773 035 A1**

(12)  **EUROPEAN PATENT APPLICATION**

(43) Date of publication:
**03.09.2014 Bulletin 2014/36**

(51) Int Cl.:
***H02M 3/158*** (2006.01)

(21) Application number: **13156919.6**

(22) Date of filing: **27.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NXP B.V.
5656 AG Eindhoven (NL)**

(72) Inventors:
• **Buthker, Henricus
Redhill, SURREY RH1 1SH (GB)**

• **Van Lammeren, Johannes
REDHILL, SURREY RH1 1SH (GB)**

(74) Representative: **Hardingham, Christopher Mark
NXP B.V.
Intellectual Property & Licensing
Red Central
60 High Street
Redhill, Surrey RH1 1SH (GB)**

(54)  **Multistage switched mode power converters and methods of operating the same**

(57)  A switched mode power converter is disclosed comprising a first stage and a second stage and an intermediate capacitive element therebetween, wherein each stage comprises at least one switching element and an inductive element and is configured to operate in a discontinuous conduction mode having a respective conducting time and a respective non-conducting time, wherein the conducting times do not overlap, and wherein the inductive element is common to both stages. Examples of switching arrangement to enable the inductive element to be common to both stages are disclosed.

Methods of operating such multistage switched mode power converters are also disclosed.

Figure 3

EP 2 773 035 A1

**Description**

<u>Field of the Invention</u>

This invention relates to multistage switched mode power converters and methods of operating the same.

<u>Background of the Invention</u>

It is commonly required to convert an AC mains voltage power supply to a low voltage such as just a few volts. Examples include low voltage LED lighting applications, or phone chargers which in Western Europe may require the conversion from a 220 volt AC supply to a 3.3V DC level. This may be done by rectifying the mains to a 325V DC level, and then using a DC-DC buck converter. The large ratio between input and output voltage leads to the converter having a very small duty cycle, at around only 1%. Such low duty cycles may be difficult to control, and generally lead to inefficient operation.

In order to utilise standard buck converters, which are typically designed for operation with duty cycles between 5% and 95%, a two-stage approach may be used. For example, using a two-stage approach the conversion from a 220V mains signal into 3.3V can be accomplished with a duty cycle of 10% in each of the two stages. Similarly, it is known to achieve a large step-up in voltage by using a two-stage boost converter.

Two-stage converters offer the possibility of improved efficiency, but there is a downside due to a generally higher component count. It would be desirable to provide a high step-up or step-down converter which does not suffer from, or which suffers to a lesser extent, from this downside or very low duty cycles.

<u>Summary</u>

According to a first aspect there is provided a switched mode power converter comprising a first stage and a second stage and an intermediate capacitive element therebetween, wherein each stage comprises at least one switching element and an inductive element and is configured to operate in a discontinuous conduction mode having a respective conducting time and a respective non-conducting time, wherein the conducting times do not overlap, and wherein the inductive element is common to both stages. Since the inductor is only required during the conducting time of each stage, by ensuring that the conducting times do not overlap, the inductor may be made available first to a first stage of the multistage switched mode power converter during its conducting time, and then to different, second stage of the multistage switched power converter during its conducting time.

In embodiments, the switched mode power converter further comprises a switching arrangement configured to electrically connect the common inductive element to the first stage during the first stage conducting time, and to the second stage during the second stage conducting time.

In embodiments, the switching arrangement comprises a first switch (S5) between an output terminal of the inductive element and an output of the switch mode power converter, and a second switch (S3) between the output terminal of the inductive element and the intermediate capacitor, wherein the first switch is arranged to be closed during the conducting time of the second stage, and the second switch is arranged to be closed during the conducting time of the second stage. Thus the output from the inductor may be used either to charge the intermediate capacitive elements, or to provide an output from the switch mode power converter. Each of the first stage and the second stage may be a buck converter stage.

In some such embodiments, the switching arrangement further comprises: a third switch (S1) between an input of the switched mode power converter and an input terminal of the inductive element; a fourth switch (S2) between the input terminal of the inductive element and the intermediate capacitor; and a fifth switch (S4a) between the input terminal of the inductive element and a local ground; wherein the third (S1) and fifth (S4a) switches are configured to be open and closed in opposition during the conducting time of the first stage, and the fourth (S2) and fifth (S4a) switches are configured to be open and closed in opposition during the conducting time of the second stage. Thus at least one of the switches may be used as the low-side switch for both the first stage and the second stage.

In other embodiments the switching arrangement comprises a third switch (S1) between an input of the switched mode power converter and an input terminal of the inductive element, and a fourth switch (S2) between the input terminal of the inductive element and the intermediate capacitor, wherein the third switch is arranged to be closed during the conducting time of the first stage, and the fourth switch is arranged to be closed during the conducting time of the second stage. Each of the first stage and the second stage may be a boost converter.

In some such embodiments, the switching arrangement further comprises: a first switch (S5) between an output terminal of the inductive element and an output of the switch mode power converter, and a second switch (S3) between the output terminal of the inductive element and the intermediate capacitor, and a sixth switch (S4b) between the output terminal of the inductive element and a local ground; wherein the first (S1) and sixth (S4b) switches are configured to be open and closed in opposition during the conducting time of the first stage, and the second (S2) and sixth (S4b) switches are configured to be open and closed in opposition during the conducting time of the second stage.

In other embodiments, the switching arrangement comprises: a fifth switch (S4a) between an input terminal of the inductive element and a local ground, operable to enable the switch mode power converter to operate as a buck converter; and a sixth switch (S4b) between an output terminal of the inductive element and a local ground, operable to enable the switched mode power converter is to operate as a boost converter.

In embodiments, the switched mode power converter is configured to operate such that the conducting time of the first stage alternates with the conducting time of the second stage, and each conducting time comprises a single current pulse through the common inductive element. However, in less preferred embodiments, the switched mode power converter may be configured such that operation of the stages does not strictly alternate, but the operation of one stage comprises two or more current pulses through the inductive element, prior to re-configuration for the other stage to utilise the inductive element. In such embodiments, one or more of the stages may be considered to be operating in a burst mode of operation.

According to another aspect there is provided a method of operating a switched mode power converter comprising a first stage and a second stage and a common inductive element, the method comprising operating each stage in discontinuous conduction mode have a conducting time and a non-conducting time, wherein the respective conducting times are non-overlapping, and electrically connecting the common inductive element to each stage during its respective conducting time.

In embodiments, during the first stage conducting time current from an input flows through the common inductive element to charge an intermediate capacitive element, and wherein during the second stage conducting time, current from the intermediate capacitive element flows through the common inductive element to supply an output.

In embodiments, the method may further comprise an output capacitor, and wherein during the second stage conducting time, the current through the common inductive element further charges the output capacitive element.

These and other aspects of the invention will be apparent from, and elucidated with reference to, the embodiments described hereinafter.

Brief description of Drawings

Embodiments of the invention will be described, by way of example only, with reference to the drawings, in which

figure 1 shows schematically a two-stage converter comprising two cascaded buck converters;
figure 2 shows schematically a two-stage converter comprising two cascaded boost converters;
figure 3 shows schematically a two-stage converter comprising two cascaded buck converters with a shared inductor according to embodiments;
figure 4 shows at figure 4(a) a schematically the operation of the first stage of a buck converter according to figure 3 and at figure 4(b) the corresponding current waveform;
figure 5 shows, at figure 5(a) schematically the operation of the second stage of the buck converter according to figure 3, and at figure 5(b) the corresponding current waveform;
figure 6 shows at figure 6(a) a practical implementation of a dual stage buck converter, and at figure 6(b) the corresponding current waveforms;
figure 7 shows an alternative dual stage buck converter, in which the diodes are replaced with active switches;
figure 8 shows schematically a two-stage converter comprising two cascaded boost converters with a shared inductor according to embodiments;
figure 9 shows at figure 9(a) a schematically the operation of the first stage of a boost converter according to figure 8 and at figure 9(b) the corresponding current waveform;
figure 10 shows, at figure 10(a) schematically the operation of the second stage of the boost converter according to figure 8, and at figure 10(b) the corresponding current waveform;
figure 11 shows at figure 11(a) a practical implementation of a dual stage boost converter, and at figure 11(b) the corresponding current waveforms;
figure 12 shows an alternative boost stage buck converter, in which the diodes are replaced with active switches; and
figure 13 shows a dual stage converter which may operate as either a buck or boost converter.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

Detailed description of embodiments

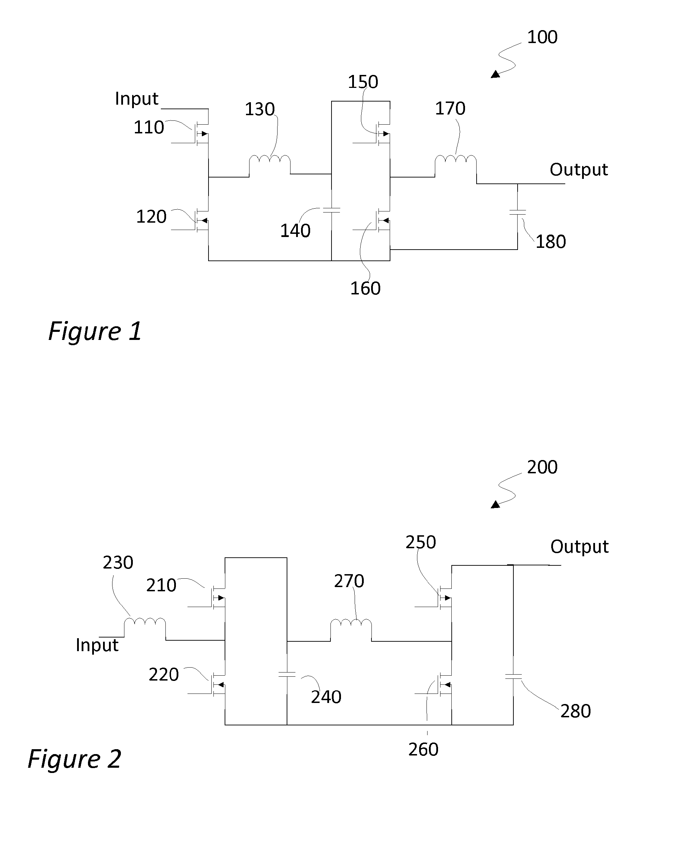

Figure 1 shows schematically a known two-stage converter 100 comprising two cascaded buck converters. The two-stage converter 100 comprises a first buck stage. This first stage comprises an input which is connected across two switches 110 and 120. The two switches 110 and 120 have a half-bridge node therebetween. An inductor 130 is connected between the half bridge node and one terminal of an intermediate capacitor 140. The other terminal of the intermediate capacitor 140 is connected to the low rail or ground. By alternately opening and closing the switches 110 and 120, in opposition, the half-bridge node is alternately connected to ground and the input. The current through the inductor 130 first rises to a peak level, and then falls back to 0 whilst charging the capacitor 140. Switches 110 and 120 may be termed as high-side switch and low-side switch respectively. Capacitor 140 acts as an intermediate capacitor between this first stage, and a second buck stage.

Similar to the first stage, the second stage comprises two switches, 150 and 160. The two switches 150 and 160 have a half-bridge node therebetween. An inductor 170 is connected between the half bridge node and one terminal of an output capacitor 180, the other terminal of which is connected to the low rail or ground. The output may be taken from the output capacitor. As can be seen from the figure, the only component which is common to both buck converter stages is the intermediate capacitor 140, which operates both as an output capacitor for the first stage and an input capacitor for the second stage. The voltage across the intermediate capacitor 140 is thus intermediate between the relatively high input voltage and the relatively low output voltage.

Figure 2 shows schematically a two-stage converter comprising two cascaded boost converters. In general, the arrangement is similar to the two-stage buck convertor, except that the inductive elements are upstream of the switches. Thus, in the first boost converter, the input is connected to a first terminal of an inductive element 230, the other terminal of which is connected to a half-bridge node between two switches 210 and 220. Switches 210 and 220 may be considered as high-side switch and low-side switch respectively. An intermediate capacitor 240 is connected across the two switches. As in the buck converter, the two switches are opened and closed alternately, in opposition, resulting in charge being transferred to the capacitor 240, although in contrast to the buck converter, in which the voltage across the intermediate capacitor 140 is lower than the input voltage, in this boost converter case the voltage across the capacitor to 240 is higher than the input. The intermediate capacitor 240 acts not only as an output from the first stage boost converter, but as an input to the second stage converter which - similar to the first stage - comprises a inductor 270 between the intermediate capacitor 240 and a half bridge node. The half bridge node is between two switches 250 and 260. An output capacitor 280 is connected across the two switches, and an output may be taken from the output capacitor. The voltage across the intermediate capacitor 240 is thus intermediate between the relatively low input voltage, and the relatively high output voltage.

In each of the converters shown in figure 1 and 2, the two stages are basically independent, and in particular have a separate inductor. Inductors are relatively expensive and large; moreover, since the same energy is transferred through both inductors, they are both relatively expensive and large.

The inventors have appreciated that if the two cascaded converters are operated in discontinuous mode (DCM), it may be possible to share the inductor between the two converters. In particular, a converter operating in DCM has a primary stroke and a secondary stroke during which the inductor current rises to a peak and then falls to zero. The primary stroke and secondary stroke may be, together, described as forming a conducting time. Since the operating mode is 'discontinuous conduction', this conducting time is followed by a non-conducting time prior to the commencement of the next primary stroke. During this non-conducting time, the inductor is not used, and thus, by appropriate reconfiguration of parts of the circuit, the inductor may be made available to another sub-circuit, and in particular to the second converter. Similarly, provided that the second converter is also operating in DCM, it may only require the inductor for a part of the time. Thus by suitably arranging the two converters in a dual stage converter to have non-overlapping conduction times, a single common inductor may be shared between the two circuits, thus potentially achieving a saving in both cost and space.

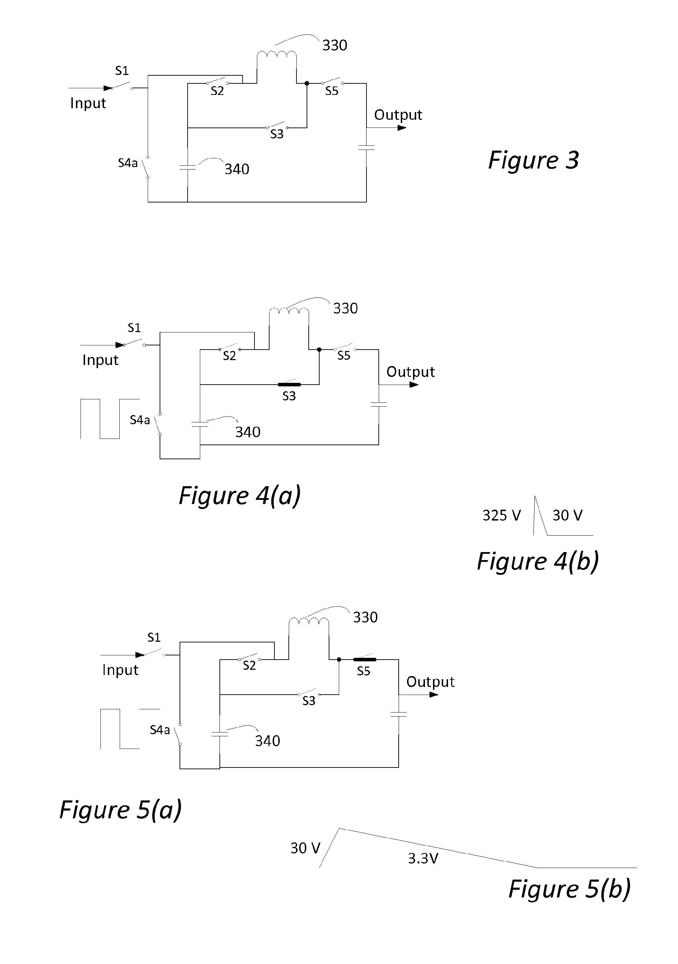

Figure 3 shows schematically a two-stage converter comprising two cascaded buck converters with a shared inductor according to embodiments. Similar to the circuit shown in figure 1, the circuit comprises an input, an output, an intermediate capacitor 340 and an output capacitor 380, but this circuit has only one inductor 330, instead of separate inductors 130 and 170 (or 230 and 270). The circuit also comprises an array of switches S1 to S3, S4a, and S5. Switch S1 is situated between the input and a first terminal of inductor 330; switch S4a is situated between this terminal of inductor 330 and ground; switch S2 is situated between this first terminal of the inductor 330 and a first terminal of the intermediate capacitor 340, the second terminal of which is connected to ground; switch S3 is situated between the first terminal of the intermediate capacitor 342 the other, second, terminal of inductor 330, and finally switch S5 is situated between this second terminal of inductor 332 and the output.

As will be described in more detail hereinbelow, switches S1 and S4a operate as high-side switch and low-side switch to a first stage, which is a buck converter operating in DCM, having Input as an input and the intermediate capacitor 340 as an output. Switches S2 and S4a operate as respective high-side and low-side switches for the second stage, which is also operates in DCM, having intermediate capacitor 340 as an input and Output as an output. Switches S3 and SI are used to reconfigure the inductor.

Operation of a two-stage buck converter as shown schematically in figure 3 will now be considered in more detail with reference to figures 4 and 5, in which figure 4 shows at figure 4(a) schematically the operation of the first stage and at figure 4(b) the corresponding current waveform, and figure 5 shows at figure 5(a) schematically the operation of the second stage and at figure 5(b) the corresponding current waveform.

During a first phase of operation, the first stage comprising the first buck converter uses the inductor: as shown in figure 4(a), switch S2 is open, switches S1 and S4a operate as conventional high-side and low-side switches for this buck converter, switch S3 is closed and S5 is open. Switches S1 and S4a are operated in opposition, and the current in the inductor builds up during the primary stroke, when S1 is closed and S4a is open, and decays again during the secondary stroke when S4a is closed and S1 is open. The energy flows from the input into the intermediate capacitor. The current through the inductor 330 is shown in figure 4(b). The current rises rapidly during the primary stroke, due to the input voltage, which as shown may typically be 325 V; during the secondary stroke the input voltage is disconnected, and by closing S4a the inductor is connected to the intermediate capacitor 340, and falls more gradually to charge the capacitor at the intermediate voltage: the figure shows an example of the intermediate voltage of 30V: in typical embodiments, the intermediate voltage value (Vmid), across the intermediate capacitor 340 is chosen to be approximately Vmid = √(Vin*Vout) such that Vin/Vmid = Vmid/Vout.

During a second phase of operation, the second stage comprising the second buck converter uses the inductor, as shown in figure 5(a): S1 and S3 are open, S5 is closed, and S2 and S4a comprise the conventional high-side and low-side switches for normal pulse width modulation (PWM) operation of the second stage buck converter. The waveform of the current through the inductor during this phase is shown at figure 5(b). During the primary stroke, current is applied through the inductor from the capacitor. Since the capacitance is at the intermediate voltage (which, as shown may be 30 V), the rate of increase in current through the inductor may be generally similar to that during the secondary stroke of the first phase. At the end of the primary stroke for the second phase, S2 is opened and S4a is closed, the current through the inductor then falls, considerably more gradually, in order to charge the output capacitor at the output voltage which, as shown may be 3.3 V.

It will be appreciated that the invention is not limited to a particular type of control for each of the first and second stages, provided only that they operate in DCM, with their conducting times being non-overlapping. However, peak current control provides for particularly simple forms of equation for the power transfer: The converted power as a function of peak current can be written as:

$$\text{Pin} = \frac{f.L.Ip^2}{2} \cdot \frac{Vin}{Vin-Vout} \ .$$

And for large ratios between Vin and Vout this can be simplified to:

$$\text{Pin} = \frac{f.L.Ip^2}{2} \ ,$$

where f = switching frequency, L = inductance of the inductor and Ip = peak inductor current. However, other control schemes may be used such as, without limitation, constant on-time or duty cycle control.

Still considering buck converter embodiments, the input voltage of the first stage will be much higher than its output voltage, which is the input voltage for the second stage. The on-time, Ton, is determined by:

$$\text{Ton} = \frac{L.Ip}{Vin-Vout} \ ,$$

whereas the secondary stroke, Toff, is determined by

$$Toff = \frac{L.Ip}{Vout}.$$

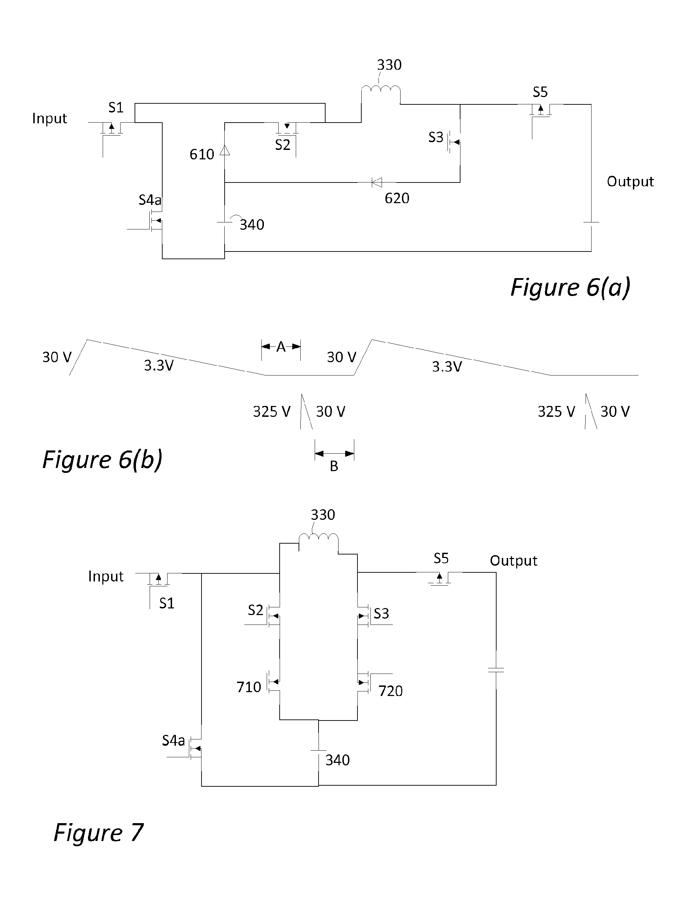

So the on-time will be much shorter for the first stage than for the second stage. The switching frequency of the combined converter is therefore not much lower than that of the second stage. This is shown in the waveforms of figure 6(b), in which the current through the inductor during the operation of the first stage, is shown below the current through the inductor during the operation of the second stage. As is clear from this figure, the second stage conducting time is non-overlapping with the first stage conducting time. In this particular embodiment, there are significant periods, shown as intervals A and B, in which neither stage is conducting. The skilled person will appreciate that these intervals may be smaller or not exist at all, in which case the timing of the opening and closing of the switches needs to be carefully controlled in order to accommodate the slew time. Further, the timing of the opening and closing of the switches may preferably be offset in order to provide for soft switching, and to prevent large cross-conduction currents, as will be immediately familiar to the skilled person.

Figure 6 shows at figure 6(a) shows a practical implementation of a dual stage buck converter according to embodiments. Switches S1 to S5 are implemented as FETs, and diodes 610 and 620 are included on the supply side of switches S2 and S3 in order to ensure that they are reverse blocking.

Without limitation, the high-side switches S1 and S2 may be implemented as PMOS transistors or as NMOS transistors with floating gate power supply.

The skilled person will appreciate that diodes 610 and 620 may be replaced by synchronous rectification switches in order to improve the operating efficiency. An embodiment comprising synchronous rectification switches 710 and 720 in place of diodes 610 and 620 is shown in figure 7.

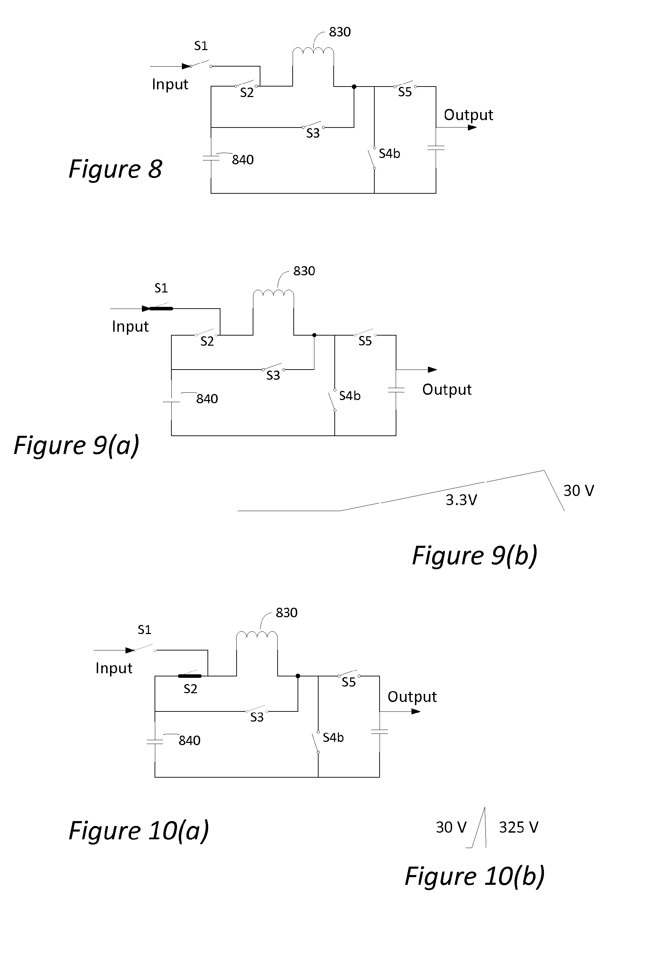

The embodiments described above have related to buck converters. However, as has already been mentioned, the invention is not limited thereto. Figure 8 shows schematically a two-stage converter comprising two cascaded boost converters with a shared inductor according to embodiments. Figures 9 and 10 show, at 9(a) and 10(a), schematically the operation of the first stage and the second stage respectively, together with corresponding waveforms of the current through the inductor at 9(b) and 10(b). Similar to the embodiments described above relating to buck converters, this two-stage converter has an input and output, intermediate capacitor 440, output capacitor 480, a single common inductor 430, and an arrangement of switches, which in this cases are S1 to S3, S4b and S5.

During the first phase, whilst the first stage is conducting, switch S1 is closed and switches S2 and SI are open. Switches S3 and S4b operate as respective high-side and low-side switches for the first boost converter. Energy flows from the input through the inductor 430 to the intermediate capacitor 440. The input is at a significantly lower voltage than the intermediate voltage. In the nonlimiting example shown at figures 9(b) and 10(b), the input voltage may be 3.3V, and intermediate voltage 30V. As a consequence, the primary stroke during which the current through the inductor increases is significantly longer than the secondary stroke during which the current through the inductor decays.

During the second phase, whilst the second stage is conducting, switch S2 is closed, and switches S1 and S3 are open. Switches S4b and S5 now act as high-side and low-side switches for the PWM switching action. Once again, the primary stroke, since it is being supplied by a the intermediate voltage, which as shown may be 30 V, is longer than the secondary stroke, in which the charge is transferred to the output, which as shown may be at 325 V.

In the boost converter case, the equation for the power is

$$Pin = \frac{f.L.Ip^2}{2} \cdot \frac{Vout}{(Vout-Vin)} \, ,$$

which, for large ratios between Vout and Vin, can be simplified to:

$$Pin = \frac{f.L.Ip^2}{2} \, .$$

For boost converters, the output stage has the higher voltage and the shorter times. The input voltage of the first stage will be much higher than its output voltage, which is the input voltage for the second stage. The on-time, Ton, is now determined by:

$$Ton = \frac{L.Ip}{Vin},$$

whereas the secondary stroke, Toff, is determined by

$$Toff = \frac{L.Ip}{Vout-Vin}.$$

So the on-time of the second stage will be much shorter than the on-time of the first stage. Once again, the switching frequency of the combined converter is not much lower than that one of the stages - in this case the first stage.

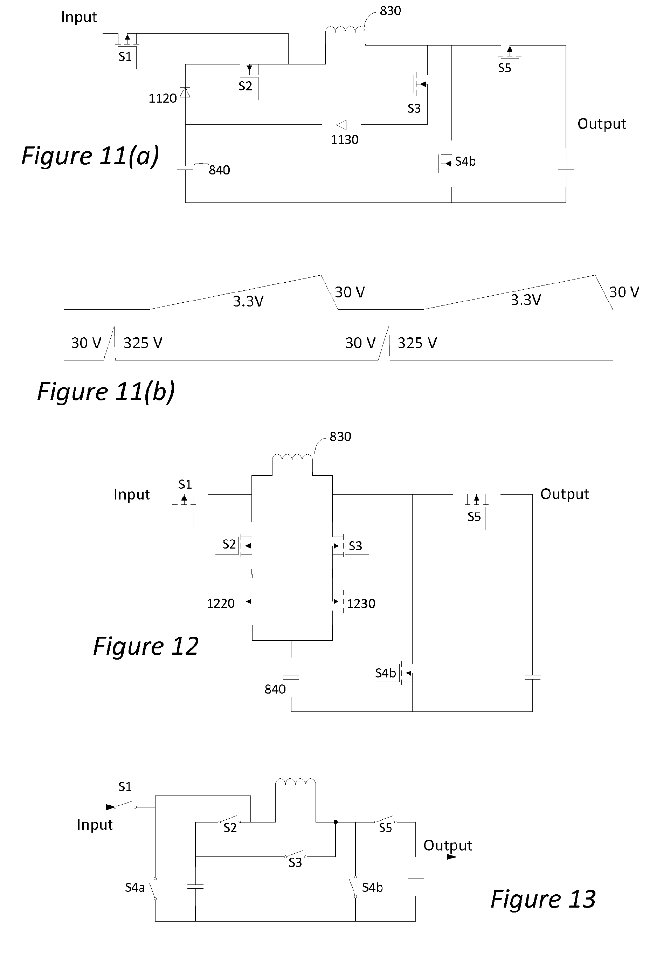

Figure 11 shows at figure 11(a) a practical implementation of a dual stage boost converter, and at figure 11(b) the corresponding current waveforms; diodes 1120 and 1130 are included in series with switches S2 and S3 in order to make them reverse blocking. Similar to buck converter embodiments, the high-side switches may be implemented with PMOS transistors, or NMOS transistors with floating gate power supply. Also similar to buck converter embodiments, the diodes may be replaced by synchronous rectification switches 1220 and 1230, as shown in figure 14.

Although buck converters and boost converters are preferred forms of the invention, it will be appreciated that the invention is not limited thereto, and that, in other embodiments, a single common inductor may be utilised as part of two cascading stages for other types of converter topologies, such as without limitation flyback or inverting converters.

Figure 12 shows a dual stage converter which may operate as either a buck or boost converter. This embodiment is a combination of those shown in figures 3 and 8, in that in this case, both switch S4a between the input terminal of the inductor and ground, and switch S4b between the output terminal of the inductor and ground, are included. By holding switch S4b open, the converter may be operated as a buck converter; conversely, by holding switch S4a open, the invert converter may be operated as a boost converter.

The above embodiments have been described in relation to two-stage converters; however the invention is not limited thereto, and, by suitable choice of the duration of the non-conducting times of the separate stages, together with appropriate reconfiguration switches for the sub-circuits, the skilled person will appreciate that the invention may extend to multistage converters having three or more stages.

The skilled person will further appreciate that, although PMOS and NMOS FETs have been described as particular implementations of the switches, the invention is not limited thereto, and in particular bipolar transistors or other switching components may be used instead place of one or more of the FETs. Similarly, although the intermediate and output capacitors have been described as a single component, the skilled person will appreciate that other forms of capacitive elements may be utilised instead of individual capacitors. Furthermore, although a single inductor has been described above, other types of inductive element may be used in place of a single inductor. Further, the skilled person would recognise that references to "ground" in the present disclosure are not restricted to a specific ground or earth; rather, they may refer to a local ground, or even to a un-grounded low rail of a power converter.

From reading the present disclosure, other variations and modifications will be apparent to the skilled person. Such variations and modifications may involve equivalent and other features which are already known in the art of multistage converters, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A switched mode power converter comprising a first stage and a second stage and an intermediate capacitive element therebetween, wherein each stage comprises at least one switching element and an inductive element and is configured to operate in a discontinuous conduction mode having a respective conducting time and a respective non-conducting time, wherein the conducting times do not overlap, and wherein the inductive element is common to both stages.

2. A switched mode power converter as claimed in claim 1 further comprising a switching arrangement configured to electrically connect the common inductive element to the first stage during the first stage conducting time, and to the second stage during the second stage conducting time.

3. A switched mode power converter as claimed in claim 2 wherein the switching arrangement comprises a first switch between an output terminal of the inductive element and an output of the switch mode power converter, and a second switch between the output terminal of the inductive element and the intermediate capacitor, wherein the first switch is arranged to be closed during the conducting time of the second stage, and the second switch is arranged to be closed during the conducting time of the second stage.

4. A switched mode power converter according to any of claims 1 to 3, wherein each of the first stage and the second stage is a buck converter stage.

5. A switched mode power converter according to claim 4 wherein the switching arrangement further comprises:

   a third switch between an input of the switched mode power converter and an input terminal of the inductive element; a fourth switch between the input terminal of the inductive element and the intermediate capacitor; and a fifth switch between the input terminal of the inductive element and a local ground;
   wherein the third and fifth switches are configured to be open and closed in opposition during the conducting time of the first stage, and the fourth and fifth switches are configured to be open and closed in opposition during the conducting time of the second stage.

6. A switched mode power converter as claimed in claim 2 wherein the switching arrangement comprises a third switch between an input of the switched mode power converter and an input terminal of the inductive element, and a fourth switch between the input terminal of the inductive element and the intermediate capacitor, wherein the third switch is arranged to be closed during the conducting time of the first stage, and the fourth switch is arranged to be closed during the conducting time of the second stage.

7. A switched mode power converted according to claim 1, 2 or 6 wherein each of the first stage and the second stage is a boost converter.

8. A switched mode power converter according to claim 7 wherein the switching arrangement further comprises:

   a first switch between an output terminal of the inductive element and an output of the switch mode power converter, and a second switch between the output terminal of the inductive element and the intermediate capacitor, and a sixth switch between the output terminal of the inductive element and a local ground;
   wherein the first and sixth switches are configured to be open and closed in opposition during the conducting time of the first stage, and the second and sixth switches are configured to be open and closed in opposition during the conducting time of the second stage.

9. A switched mode power converter as claimed in any of claims 2 to 8, wherein the switching arrangement comprises: a fifth switch between an input terminal of the inductive element and a local ground, operable to enable the switch mode power converter to operate as a buck converter; and a sixth switch between an output terminal of the inductive element and a local ground, operable to enable the switched mode power converter is to operate as a boost converter.

10. A switched mode power converter as claimed in any preceding claim, configured to operate such that the conducting time of the first stage alternates with the conducting time of the second stage, and each conducting time comprises a single current pulse through the common inductive element.

11. A method of operating a switched mode power converter comprising a first stage and a second stage and a common inductive element,

the method comprising operating each stage in discontinuous conduction mode have a conducting time and a non-conducting time, wherein the respective conducting times are non-overlapping,

and electrically connecting the common inductive element to each stage during its respective conducting time.

12. The method of claim 10, wherein during the first stage conducting time current from an input flows through the common inductive element to charge an intermediate capacitive element, and wherein during the second stage conducting time, current from the intermediate capacitive element flows through the common inductive element to supply an output.

13. The method of claim 10 or 11, further comprising an output capacitor, and wherein during the second stage conducting time, the current through the common inductive element further charges the output capacitive element.

100

Input
110
130
150
170
Output
120
140
160
180

*Figure 1*

200

230
210
250
Output
Input
220
270
240
260
280

*Figure 2*

Figure 3

Figure 4(a)

Figure 4(b)

325 V    30 V

Figure 5(a)

Figure 5(b)

30 V    3.3V

Figure 6(a)

Figure 6(b)

Figure 7

Figure 8

Figure 9(a)

Figure 9(b)

Figure 10(a)

Figure 10(b)

Input
830

S1
1120
S2
S3
S5
Output
1130
840
S4b

## Figure 11(a)

3.3V
30 V
3.3V
30 V
30 V | 325 V
30 V | 325 V

## Figure 11(b)

830

Input  S1
Output
S2
S3
S5
1220
1230
840
S4b

## Figure 12

S1
Input
S2
S5
S3
Output
S4a
S4b

## Figure 13

14

Europäisches
Patentamt
European
Patent Office
Office européen
des brevets

**EUROPEAN SEARCH REPORT**

Application Number

EP 13 15 6919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 290 794 A1 (OPTION [BE]) 2 March 2011 (2011-03-02) * paragraphs [0028] - [0030]; figures 2-4 * | 1-13 | INV. H02M3/158 |
| A | US 5 006 782 A (PELLY BRIAN R [US]) 9 April 1991 (1991-04-09) * column 2, line 8 - column 2, line 65; figure 3 * | 1,4,11 | |
| T | US 2010/039080 A1 (SCHOENBAUER STEVE [US] ET AL) 18 February 2010 (2010-02-18) * paragraph [0006] * | | |

TECHNICAL FIELDS
SEARCHED      (IPC)

H02M

The present search report has been drawn up for all claims

| Place of search | Date of completion of the search | Examiner |
|---|---|---|
| The Hague | 24 May 2013 | Speiser, Pierre |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
............................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 13 15 6919

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2013

| Patent document cited in search report | | Publication date | Patent family member(s) | | Publication date |
|---|---|---|---|---|---|
| EP 2290794 | A1 | 02-03-2011 | NONE | | |
| US 5006782 | A | 09-04-1991 | NONE | | |
| US 2010039080 | A1 | 18-02-2010 | JP | 2010045966 A | 25-02-2010 |
| | | | US | 2010039080 A1 | 18-02-2010 |

For more details about this annex : see Official Journal of the European Patent Office, No. 12/82